# EUROPEAN PATENT SPECIFICATION

(11) **EP 0 517 642 B1**
(45) Date of publication and mention of the grant of the patent: **29.05.1996**
(21) Application number: 92500009.3
(22) Date of filing: 24.01.1992
(51) Int. Cl.: F16C 33/58, F16C 19/00

(54) **Rolling element bearing with modified contact geometry**
Wälzlager mit modifizierter Kontaktgeometrie
Palier à roulement avec géométrie de contact modifiée

(30) Priority: 05.06.1991 ES 9101346
(43) Date of publication of application: 09.12.1992
(73) Proprietor: Sanchez Sanchez, Felix, E-50005 Zaragoza (ES)
(72) Inventor: Sanchez Sanchez, Felix, E-50005 Zaragoza (ES)

(56) References cited:
- CH-A- 327 413
- DD-A- 6 033
- DE-A- 276 688
- DE-C- 935 039
- FR-A- 429 657
- FR-A- 2 076 601
- SU-A- 1 401 179
- SKF General Catalogue, Catalogue 4000 E, Reg. 47.69 000. 1989-04, pages 56-63

## Description

The present invention relates to rolling element bearings as defined in the preamble of claim 1.

A known bearing having two points of contact on the inner and outer race is a four point contact bearing.

As is generally known, a rolling element bearing, as its name indicates, is intended as a means of bearing, reducing frictions, in order to achieve optimum working conditions in a machine or apparatus on which the bearing is mounted.

In such bearings, friction arises due to the fact that the rolling contact is not ideal.

This friction causes high temperatures and consumes a great deal of energy, and also produces continuous wear that leads to the progressive shortening of the life of the bearing.

Therefore the intention of the invention is to increase the output of the bearing by modifying the points of contact between the same and its running tracks, thus achieving important advantages over that already known, such as: Reduction of friction in the bearings. Decrease of noise and heating. And a noticeable extension of the life of the bearing since it is possible to reduce friction to a desired minimum.

The invention is defined in independent claim 1.

For greater clarity and to aid in understanding the invention, attached to the same are ten sheets of plans in which is illustrated an example of how the object claimed may be made in practice,and which is described and shown simply as an example and thus without any limitation implied, to the bearing as claimed.

The said drawings show different examples of how the invention is made , according to the different technical characteristics explained later,with the illustrations corresponding to the following figures:

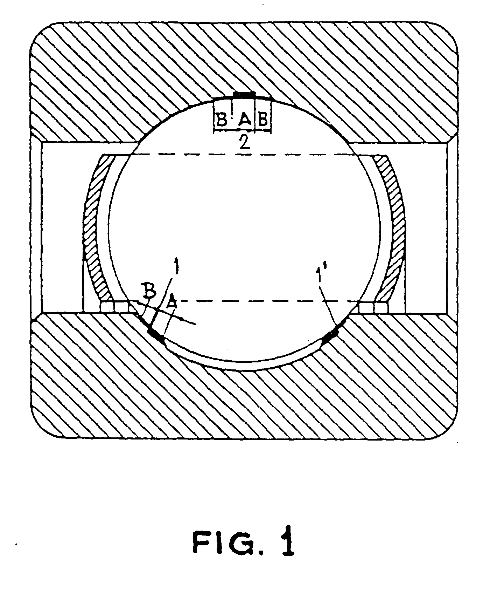

Figure 1. Diameter of the point of contact of the internal bearing track, height 2 = 82,80 mm.
   Diameter of the contact point of the ball height 2 = 12,70 mm.
   Ratio between diameters = 6.520.
   Diameter of the point of contact of the external track heights 1 and 1' = 60,80 mm.
   Diameter of the point of contact of the bearing of the external ball track heights 1 and 1' = 9,326 mm.
   Ratio between diameters = 6.520.

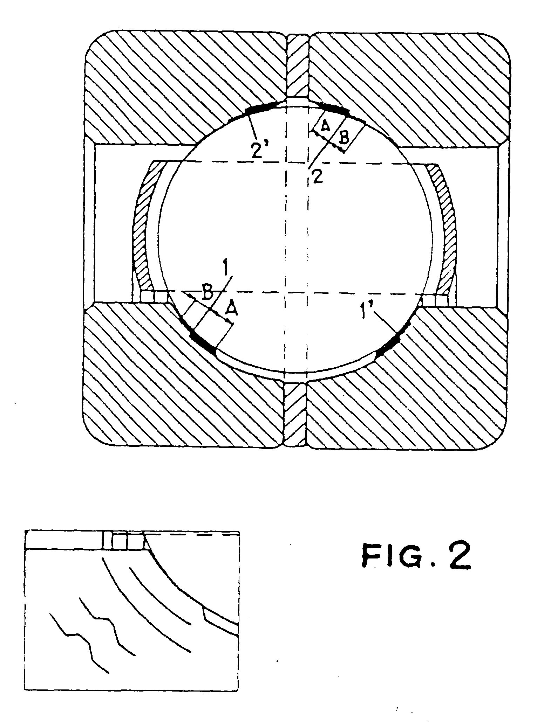

Figure 2. Diameter of the point of contact of the internal bearing track, heights 2 and 2' = 82,50 mm.
   Diameter of the contact point of the ball in the internal track heights 2 and 2' = 12,30 mm.
   Ratio between diameters = 6.708.
   Diameter of the point of contact of the ball in its external bearing track heights 1 and 1' = 60,80 mm.
   Diameter of the point of contact of the bearing of the external ball heights 1 and 1' = 9,064 mm.
   Ratio between diameters = 6.708.

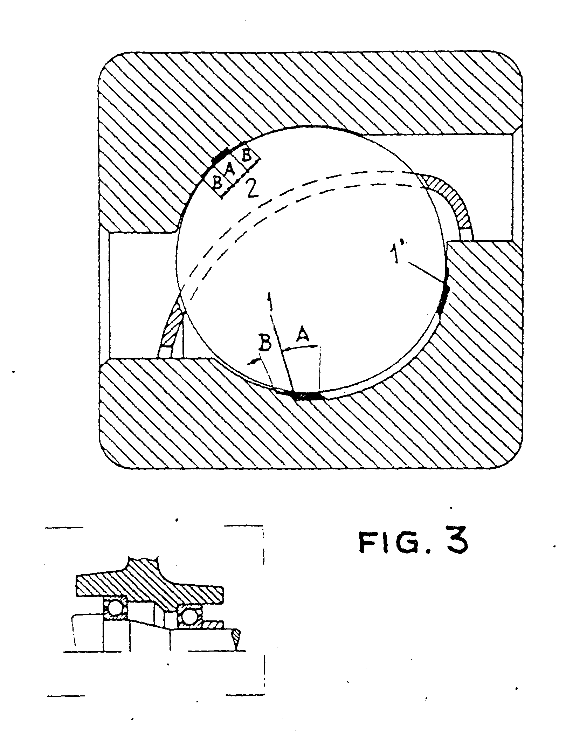

Figure 3. Diameter of the point of contact of the internal bearing track, height 2 = 79,80 mm.
   Diameter of the contact point of the ball in the internal track height 2 = 12,70 mm.
   Ratio between diameters = 6.284.
   Diameter of the point of contact of the external bearing track height 1 = 57,40 mm.
   Diameter of the point of contact of the ball in its external bearing height 1 = 9,135 mm.
   Ratio between diameters = 6.284.
   Diameter of the point of contact of the external bearing track height 1' = 66,42 mm.
   Diameter of the point of contact of the external ball height 1'=10,57 mm. Ratio between diameters = 6.284.

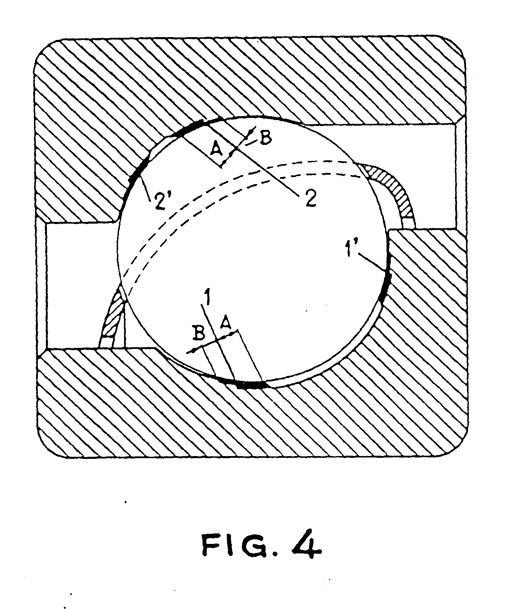

Figure 4. Diameter of the point of contact of the internal bearing track, height 2' = 76,30 mm.
   Diameter of the contact point of the ball in the internal track height 2' = 11,555 mm.
   Diameter of the point of contact of the internal bearing track height 2' = 81,20 mm.
   Diameter of the point of contact of the ball in its internal bearing height 2 = 12,30 mm.
   Ratio between the first diameters = 6.603.
   Ratio between the second diameters = 6.602.
   Diameter of the point of contact of the external bearing track height 1 = 67,00 mm.
   Diameter of the point of contact of the external ball height 1'=10,15 mm.
   Ratio between diameters = 6.601.
   Diameter of the point of contact of the external bearing track height 1 = 57,50 mm.
   Diameter of the point of contact of the ball bearing height 1 = 8,71 mm.
   Ratio between diameters = 6.602.

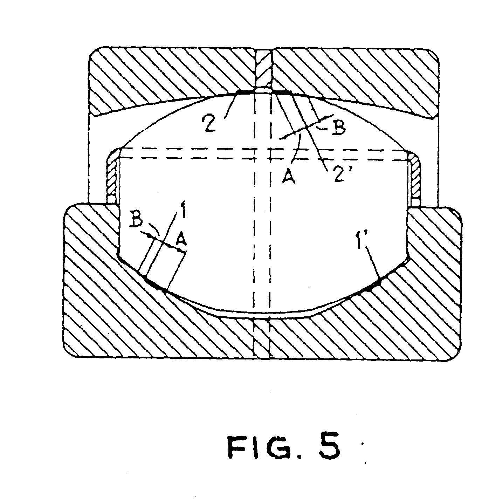

Figure 5. Diameter of the point of contact of the internal bearing track, heights 2 and 2' = 84,00 mm.
   Diameter of the contact point of the roller in the internal tracks heights 2 and 2' = 14,00 mm.
   Diameter of the point of contact of the external bearing track heights 1 and 1' = 60,00 mm.
   Diameter of the point of contact of the roller in its internal bearings heights 1 and 1' = 10,00 mm.
   Ratio between the first diameters = 6.
   Ratio between the second diameters = 6.

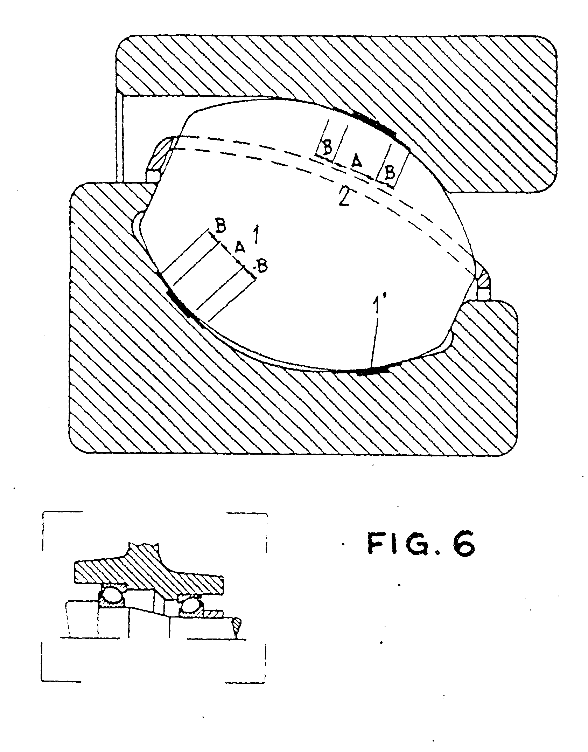

Figure 6. Diameter of the point of contact of the internal bearing track, height 2 = 82,00 mm.
   Diameter of the contact point of the roller in the internal track height 2 = 12,00 mm.
   Ratio between diameters = 6.750.
   Diameter of the point of contact of the external bearing track,height 1 = 66,15 mm.
   Diameter of the contact point of the roller in the external track height 1 = 9,80 mm.
   Ratio between diameters = 6.750.
   Diameter of the point of contact of the external bearing track, height 1' = 58,30 mm.
   Diameter of the contact point of the roller in the external track height 1' = 8,638 mm.
   Ratio between diameters = 6.750.

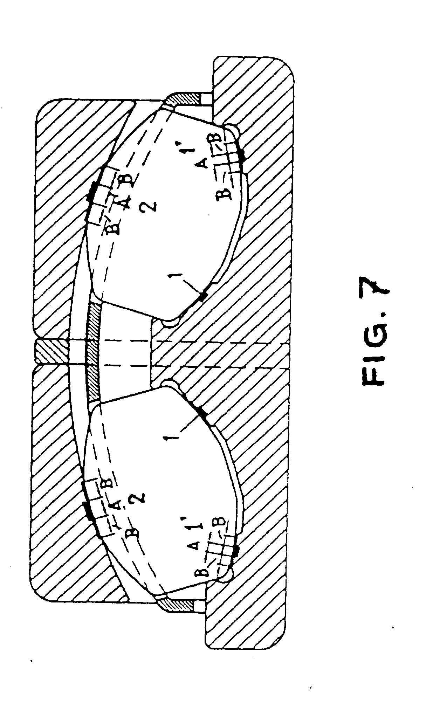

Figure 7. Diameter of the point of contact on the double internal bearing tracks, height 2 = 80,667 mm.
   Diameter of the contact points of the rollers in the internal tracks height 2 = 12,00 mm.
   Diameter of the points of contact of the double external bearing tracks, height 1' = 56,667 mm.
   Diameter of the contact point of the rollers in the external tracks height 1' = 8,43 mm.
   Ratio between first diameters = 6.723.
   Ratio between second diameters = 6.722.
   Diameter of the points of contact of the external bearing tracks , height 1 = 63,417 mm.
   Diameter of the contact points of the rollers in the external tracks heigth 1 = 9,434 mm.
   Ratio between diameters = 6.723.

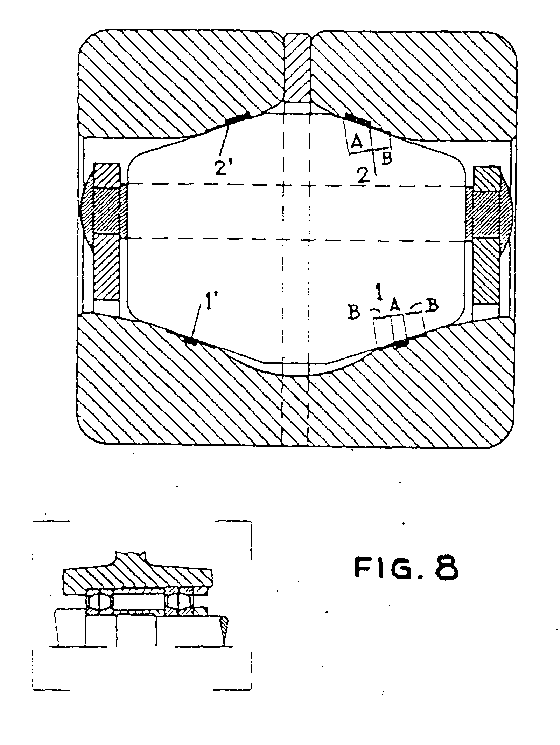

Figure 8. Diameters of the points of contact on the double internal bearing tracks, heights 2 and 2' = 81,25 mm.
   Diameter of the contact points of the roller in the internal track heights 2 and 2' = 11,50 mm.
   Ratio between diameters = 7.066.
   Diameters of the points of contact of the external bearing tracks heights 1 and 1' = 61,25 mm.
   Diameters of the contact points of the rollers in the external track heights 1 and 1' = 8,669 mm.
   Ratio between diameters = 7.066.

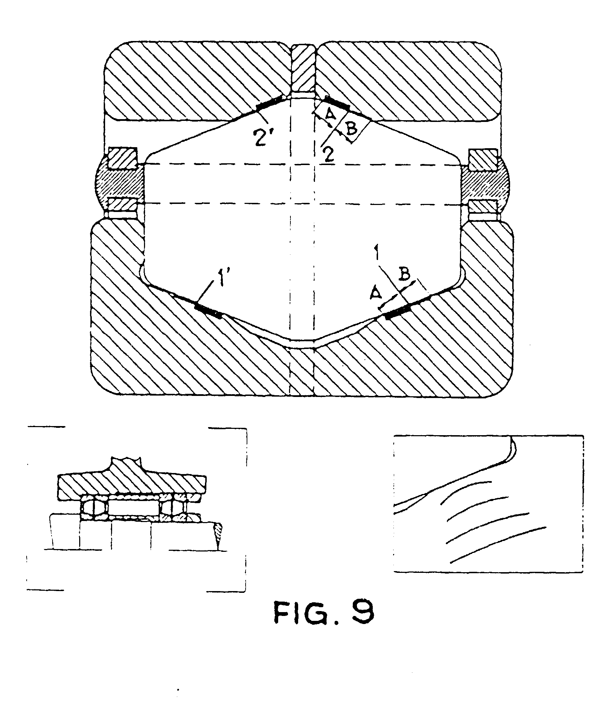

Figure 9. Diameters of the points of contact on the internal bearing track, heights 2 and 2' = 87,334 mm.
   Diameters of the contact points of the roller in the internal tracks heights 2 and 2' = 14,667 mm.
   Ratio between diameters = 5.955.
   Diameters of the points of contact of the external bearing track,heights 1 and 1' = 62,167 mm.
   Diameters of the contact points of the roller in the external tracks heights 1 and 1' = 10,44 mm.
   Ratio between diameters = 5.955.

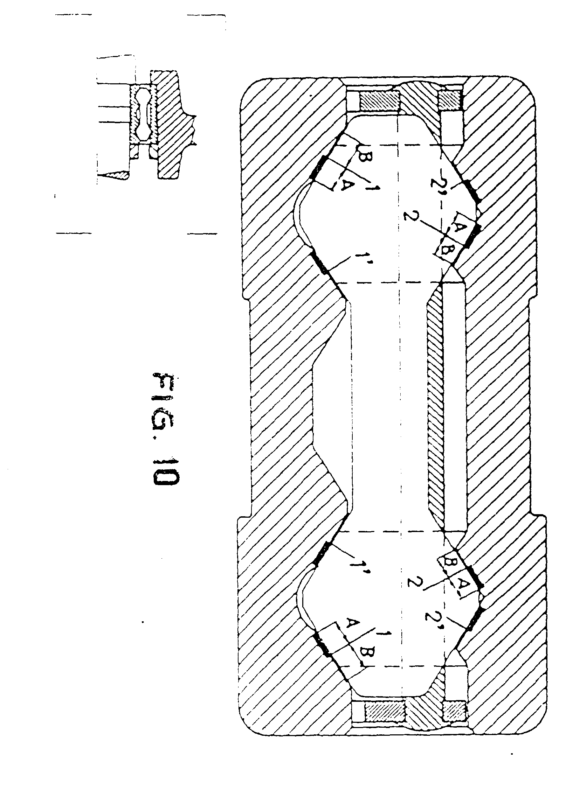

Figure 10. Diameters of the double points of contact on the internal bearing tracks, heights 2 and 2' = 79,40 mm.
   Diameters of the contact points of the rollers in the internal tracks heights 2 and 2' = 12,40 mm.
   Ratio between diameters = 6.403.
   Diameters of the points of contact of the external bearing tracks, heights 1 and 1' = 58,00 mm.
   Diameters of the contact points of the roller in the external tracks heights 1 and 1' = 9,06 mm.
   Ratio between diameters = 6.402.

Drawings 1 to 10 clearly show where the contact points are situated.

To open or close the contact points of the heights of spherical or semispherical bearings in Figures 5, 6 and 7 the radii of the arcs of contact of heights 1 and 1' of Figure 5 and the contact heights 2 and of Figure 6 must be reduced or increased, and also the double contact heights 1 and 1' in Figure 7.

To open or close the contact points of the heights of the biconical roller bearings, the degrees of inclination of the bearing tracks of heights 1 and 1' in Figure must be increased or decreased, as must also be done with the heights 1 and 1' in Figure 9. In the double biconical bearing track for biconical bearings (Figure 10) the angles of the contact tracks of height 1 and 1' must be increased or reduced.

The said contact points continuously give rise to problems and at the same time destroy the bearing since two points are involved . By transforming these points into contact lines, there will be three or four contactlines instead of two as usually occurs in conventional ball bearings.

If we compare what arises with two points of contactona ball, with three or four contact lines on a length of approximately one and a half millimetres multiplied by three or four, this gives a contact length of four and a half millimetres to six millimetres , and comparing this with two contact points the high output that this transformation gives is extremely surprising.

Thus the balls will behave as if they were rollers which means that, aside from the great advantages cited above, there is enormous smoothness in the bearing and a very high percentage of disagreeable noise also desappears.

Figure 1 shows a ball bearing of the rigid type of international series 6200 , with measurements or characteristics similar to bearing 6210.

In the upper part is a height marked with thick lines numbered 2 with the letters A and B, the height of the letter A is that of contact and those at B are the damping.

The diameter of the contact point of the ball in its internal bearing track height 2 is 82,80 mm. and the diameter of the ball in the same contact point is 12,70 mm; the ratio between both diameters is 6.520. In the lower part of the drawing are two heights 1 and 1' with their corresponding letters A and B.

The diameter of the point of contact of the ball in its external track heights 2 and 2' is 60,80 mm. and the diameter of the ball at the same point of contact is 9,326 mm. with the ratio between both diameters is 6.520.

Given below is an example of a ball bearing such as N^{º} 6210 : Approximate diameter of the bearing

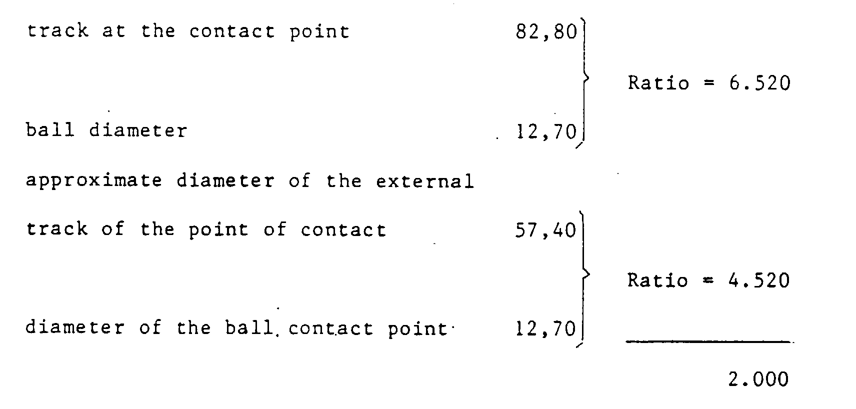

The difference between the two ratios is 2.00.

The characteristics of the case illustrated in Figure 2 are different from those of Figure 1,since this is an adjustable bearing very useful for large and medium sizes, correcting wear so as to prolong the life of the bearing.

Such Figure 2 shows four points of ball contact. In this way the ball behaves as if it was a roller , since the so-called contact points are converted into lines which highly favours the output of the bearing, prolonging its life many times since it supports a much greater load. It must also be remembered that by reducing friction wear is much less and results are higly satisfactory.

With regard to the shapes and sizes of the contact lines of the balls, barrels or biconical rollers , there are many forms, for example straight, concave, convex , more or less truncated pyramid, etc., with the most appropriate applied in each case.

For greater clarity, the drawing in Figure 2 shows four contact lines in the lower part.

However, balls of great geometric quality must always be used.

The diameter of the point of contact of the ball in its internal track heights 2 and 2' is 82,50 mm. and the diameter of the ball at the same external point of the track is 12,30 mm. , with the ratio between both diameters being 6.708.

The diameter of the point of contact of the ball in its external track is 60,80 mm. and the diameter of the ball in the same external point of the track at heights 1 and 1' is 60,80 mm.,and the diameter of the ball in the same external point of the track is 9,064 mm. The ratio between both diameters is 6.708.

Figure 3 corresponds to a radial-axial bearing. It has the same concept as those in Figures 1 and 2 above since friction is reduced and more output achieved at the same time. It is differentiated from the others because, since it is radial-axial it has unequal contact angles.

The central internal diameter of the point of contact of the bearing track on the internal part height 2 is 79,80 mm. and the diameter of the ball at same contact point is 12,70 mm. , with the ratio between both diameters being 6.284.

The diameter of the point of contact of the ball in its external track height 1 letter A is 57,40mm. and at that same point of contact the diameter of the ball is 9,135 mm. , and the ratio that exists between both is also 6.284.

The diameter of the point of contact of the ball in its external track height 1' is 66,42 mm. as in the zone mentioned above and in this point of contact the ball has a diameter of 10,57 and thus the ratio between the two diameters is a total of 6.284 with the same ratio and objectivity as previously.

The contact points of the bearing , whether ball , biconical rollers , spherical or barrel can be extended in both directions, forming contact lines as wide as necessary for each case.

Figure 4 shows a radial-axial bearing similar to that in Figure 3 according to the drawing (Figure 4) . It has two contact points or lines on the internal tracks in the zones 2 and 2' and its contact angles are more unequal than in the bearing in Figure 3.

Since there are four contact points more smoothness and output are imparted to the bearing.

The internal diameter of the contact point of the ball in its track height 2 is 81,20 mm. and the diameter of the ball in its contact point is 12,3 mm., with a ratio between the two of 6.602.

In the opposite direction the contact point or line is found for the ball in the external track height 1' where the diameter is 67 mm. and as in all previous contacts the ball has a diameter of 10,15 mm. at its contact with the track, giving a ratio between them of 6.601 and this ratio is equal to the opposite one.

The diameter of the point of contact of the ball in its internal track height 2' is 76,30 mm. and the diameter of the ball with the internal track contact in the same point of zone 2' is 11,555 mm., giving a ratio between them of 6.603.

The point of contact of the ball in its external track height 1 is 57,5 mm. and the diameter of the ball with the same point of contact in the external track of height 1 is 8,71 mm.,with the latter ratio between them being 6.602.

Figure 5 shows and adjustable spherical bearing for medium and large sizes which is very easy to adjust for recovery.

The contact points are mentioned frequently but it must not be forgotten that it is very important that the contact points be transformed into lines, since this is fundamental in order to achieve important results without low friction indices.

In this bearing we shall show only two contact points since the bearing is symmetrical.

The diameter of the contact point of the roller in its internal track heights 2 and 2' is 84 mm.

The external diameter of the roller in its spherical part on the internal contact point heights 2 and 2' is 14 mm. and therefore the ratio between them is 6. The diameter of the point of contact of the external bearing track heights 1 and 1' = 60.00 mm.

The diameters of the contact points of the roller in its external track heights 1 and 1' is 10,0 mm. Therefore the ratios between each other are the same in the four contact points, i.e. 6.

In this type of spherical bearing the contact lines may be wider than in any of the others mentioned above and thus with a very small percentage of friction.

The radial-axial barrel bearing appearing in Figure 6 , in spite of having unequal contact angles, has very wide contact lines with little friction, giving great solidity,and this type of bearing is also adjustable.

It is also very important to maintain perfect balance in the contact points, particularly when the contact lines are widened.

The diameter of the point of contact of the roller in its internal track height 2 letter A is 82 mm. and the external diameter of the roller at this same contact point is 12 mm. , with a ratio between the two of 6.750.

The diameter of the contact point of the roller in its external track height 1' letter A is 58,30 mm., with the diameter of the roller at this same point being 8,638 mm. In this way the ratio between the mentioned diameters is 6.750.

The contact point of the roller in its external track height 1 is 66,15 mm. The diameter of the external point of contact of the roller at height 1 is 9,8 mm. and naturally the ratio is the same , i.e. 6.750 and thus friction is overcome.

Figure 7 shows an oscillating spherical bearing with a double line of adjustable rollers, very useful for large sizes.

The contact points or lines are situated in such a way as to have the same ratios between them in spite of having unequal contact angles, and thus here is perfect equilibrium as detailed below :

The diameter of the contact point of the internal roller tracks at heights 2 and 2' is 80,667 mm., where the diameter of the roller at that same contact point at height 2 letter A is 12 mm. The ratio existing between these two diameters is 6.723.

The diameter of the contact point of the roller in its external track height 1' letter A is 56,667 mm., with the diameter of the semispherical roller at that same point being 8,43 mm. and the ratio between both diameters is 6.722.

Lastly, the diameter of the contact point of the roller in its external track at height 1 letter A is 63,417 mm. The diameters of the contact points of the roller in its external track heights 1 and 1' is 9,434 mm.,and the ratio between these six contact points is 6.723.

Shown in Figure 8 is a biconical adjustable bearing. This bearing is very special since it is outside all the rules and standards for conical bearings up to now.
In principle it has no frontal or axial friction as do present conical bearings that when this friction is added to the friction of the rollers, generate enormous heat which limits revolutions and at the same time consumes a great deal of energy, something which does not occur with the new adjustable biconical bearing (Figure 8).

From all that given above, the contact points must be increased between rollers and tracks in order not to loose the fundamental characteristics which are the great load and resistance to which they are subjected, even through a certain percentage of friction is sacrificed.

For normal working they should be mounted in pairs. The diameters of the rollers in their bearing tracks are given below :

The diameters of the points of roller contact in its internal track height 2 and 2' are 81,25 mm. The diameters of the conical roller at the same contact point of heights 2 and 2' are 11,5 mm., and the ratio between them 7.066.

The diameters of the contact points of the roller in the external track at heights 1 and 1' are 61,25 mm.

The diameters of the contact points of the roller in the external track at heights 1 and 1' are 8,669.,and the ratio between them 7.066.

This adjustable biconical bearing (Figure 9) is similar to that of Figure 8, varying only in that the conical rollers are set into the external track of the interior part of the bearing.

In the plan shown in Figure 9 as a whole, there is a square with different forms of contacts, where the most usual have been drawn although there are very many more and the most useful will be used in each case.

The diameters of the contact points of the roller in the internal track heights 2 and 2' are 87,334 mm. The external diameter of the conical roller at the contact point with the track at heights 2 and 2' is 14,67 mm. and the ratio between both diameters is 5.955.

The diameter of the roller contact points in the external track heights 1 and 1' are 62,167 mm.

The external diameters of the conical rollers at the point of contact with the track at heights 1 and 1' are 10,44 mm., with a ratio between both of 5.955.

The points of contact of the rollers with their corresponding bearing tracks at heights 1 and 1', and 2 and 2' are equivalent to each other and therefore only two measurements of their-corresponding diameters have been detailed.

Lastly, in Figure 10 is shown a double biconical bearing almost exactly like those in Figures 8 and 9. Its main characteristic is that the biconical bearings are joined in one piece, giving them more stability and rigidity, and thus forming a single bearing.

They are used preferably in places with low revolutions.

Since all the contact points are equivalent to each other only two opposite contact points will be mentioned.

The diameter of one of the four internal contact points in the track at the double heights 2 and 2' is 79,40 mm.

The diameter of the contact point of the biconical roller in its track at heights double 2 and 2' is 12,40 mm. , with the ratio between both diameters being 6.404.

The diameter of one of the four external points of contact of the tracks at heights 1 and 1' double is 58 mm.

The diameter of the contact points of the biconical roller in its bearing track at heights 1 and 1' double is 9,06 mm. giving a ratio between these diameters of 6.402.

Having described and shown various embodiments of the invention in sufficient depth and with sufficient clarity to allow it to be exploited, it is clear that accidental details such as shape, size , materials and manufacturing procedures may be altered with regard to that described within the scope of the appending claims.

## Claims

1. A rolling element bearing comprising:
- an outer race;
- an inner race;
- rolling elements in the form of balls, barrels or biconical rollers, between the internal and external tracks, having point or lines of contact (1,1',2,2') with the inner and outer races;
the rolling elements having:
- a diameter which decreases toward the axial ends of the rolling elements, and
- two points or lines of contact (1, 1') with the inner race;
characterised in that:
the diameter of the rolling elements at the points or lines of contact (1, 1') with the inner race is smaller than the diameter of the rolling elements at the point(s) or line(s) of contact (2, 2'), with the outer race,
such that the ratios between the diameters of the inner race and the diameters of the rolling elements at their mutual points or lines of contact (1, 1') are equal to the ratios between the diameters of the outer race and the diameters of the rolling elements at their mutual points or lines of contact (2, 2').

2. A rolling element bearing, according to claim 1, is characterised in that the rolling elements have one or two points or lines of contact (2, 2') with the outer race.

3. A rolling element, according to claim 1 or 2, is characterised in that the bearing is a grooved ball bearing (Figures 1 and 2), or is an angular contact grooved ball bearing (Figures 3 and 4).

4. A rolling element bearing, according to claim 1 or 2, is characterised in that the bearing is a spherical bearing (Figures 5 and 7) or angular contact semispherical bearing (Figure 6), in which the points or lines of contact have been adapted by increasing or reducing the radii of the contact arcs.

5. A rolling element bearing, according to claim 1 or 2, is characterised in that the bearing is a grooved biconical bearing (Figures 8 and 9), or grooved double biconical bearing (Figure 10), in which the points or lines of contact have been adapted by increasing or reducing the degree of inclination of the bearing tracks.

## Patentansprüche

1. Ein Wälzlager bestehend aus:
- einer äußeren Laufbahn
- einer inneren Laufbahn
- Wälzkörpern in Form von Kugeln, Tonnenrollen oder doppeltkonischen Rollen zwischen der inneren und der äußeren Laufbahn, mit Kontaktpunkten oder -linien (1, 1', 2, 2') mit der inneren und der äußeren Laufbahn;
die Wälzkörper mit:
- einem zu den Axialenden der Wälzkörper hin abnehmenden Durchmesser, und
- zwei Kontaktpunkten oder - linien (1, 1') der inneren Laufbahn:
dadurch gekennzeichnet, daß:
der Durchmesser der Wälzkörper an den Kontaktpunkten oder-Linien (1,1') mit der inneren Laufbahn kleiner ist als der Durchmesser der Wälzkörper am/an den Kontaktpunkt/en oder linie(n) (2,2') mit der inneren Laufbahn, so daß das Verhälthis zwischen den Durchmessern der inneren Laufbahn und den Durchmessern der Wälzkörper an ihren gemeinsamen Kontaktpunkten oder -linien (1,1') gleich ist wie das Verhältnis zwischen den Durchmessern der äußeren Laufbahn und den Durchmessern der Wälzkörper an ihren gemeinsamen Kontaktpunkten oder -linien (2,2').

2. Ein Wälzlager gemäß Anspruch 1, dadurch gekennzeichnet, daß die Wälzkörper einen oder zwei Kontaktpunkte oder -linien (2,2'). mit der äußeren Laufbahn haben.

3. Ein Wälzkörper gemäß Anspruch 1 oder 2, dadurch gekennzeichnet, daß das Wälzlager ein Rillenkugellager ist (Abb. 1 und 2), oder daß es ein Schrägrillenkugellager ist.

4. Ein Wälzlager gemäß Anspruch 1 oder 2, dadurch gekennzeichnet, daß das Lager kugelförmig (Abbildungen 5 und 7) oder ein halbkugelförmiges Schrägkugellager ist (Abbildung 6), bei dem die Kontaktpunkte oder -linien mittels Vergrößerung oder Verkleinerung der Radien der Kontaktringe angepaßt worden sind.

5. Ein Wälzlager gemäß Anspruch 1 oder 2, dadurch gekennzeichnet, daß das Lager ein doppeltkonisches Rillenlager (Abbildungen 8 und 9) oder ein doppeltkonisches Doppelrillenlager ist (Abbildung 10), bei dem die Kontaktpunkte oder -linien mittels Vergrößerung oder Verkleinerung des Neigungswinkels der Laufbahnen angepaßt worden sind.

## Revendications

1. Un roulement d'éléments roulants est composé par:
- une piste extereure.
- une piste interieure.
- éléments roulants en forme de billes, baril ou rouleaux, avec points ou lignes de contac (1,1',2, 2') avec les roulements interieurs et exterieurs.
les éléments roulants avec:
- un diamétre qui diminue vers les extremités axiales des éléments roulants.
- deux points ou lignes de contact (1, 1') avec la piste interieure.
il est caracterisé par:
le diamétre des éléments roulants dans les points ou lignes de contact (1, 1') avec la piste interieure est plus petit que le diamétre des éléments roulants dans le(s) point(s) ou ligne(s) de contact (2, 2') avec la piste interieure, de telle façon que les relations entre les diamétres des éléments roulants dans leurs points ou lignes de contact mutuels (1, 1') sont égales aux relations entre les diamétres de la piste exterieure et les diamétres des éléments roulants dans leurs points ou lignes de contact mutuels (2, 2').

2. Un roulement d'éléments roulants, selon la revendication 1, est caracterisé par les éléments roulants qui ont un ou deux points ou lignes de contact (2, 2') avec la piste exterieure.

3. Un element roulant selon la revendication 1 ou 2, est caracterisé por le roulement à billes rainuré (Figures 1 et 2) ou par le roulement à billes rainuré de contact angulaire.

4. Un roulement d'éléments roulant, selon la revendication 1 ou 2 est caracterisé parce que le roulement est spherique (Figures 5 et 7) ou semispherique de contact angulaire (Figure 6) dans lequel les points ou lignes de contact ont été adaptés par le biais de l'augmentation ou reduction des rayons des arcs de contact.

5. Un roulement d'éléments roulants selon revendication 1 ou 2, est caracterisé parce que le roulement est biconique rainuré (Figures 8 et 9) ou biconique double rainuré (Figure 10) dans lequel les points ou lignes de contact ont été adaptés par le biais d'une augmentation ou reduction du degré d'inclination des pistes de roulement.
